# EUROPÄISCHE PATENTANMELDUNG

(11) **EP 1 215 060 A2**
(43) Veröffentlichungstag der Anmeldung: **19.06.2002**
(21) Anmeldenummer: 01129607.6
(22) Anmeldetag: 12.12.2001
(51) Int. Cl.: B60H 1/00

(54) **Stellantrieb zur Verstellung einer Klappe**

(30) Priorität: 16.12.2000 DE 10062917
(71) Anmelder: Bühler Motor GmbH, 90459 Nürnberg (DE)
(72) Erfinder: Bernreuther, Georg, 90449 Nürnberg (DE); Harrer, Andreas, 90602 Pyrbaum (DE)

(57) **Zusammenfassung**

Die Erfindung betrifft einen Stellantrieb (1) zur Verstellung einer Klappe (2), für eine Klimaanlage, Heizung oder Lüftung, bestehend aus einem Gehäuse (3), einem Antriebsmotor (4), einem Untersetzungsgetriebe (5) und einer Ausgangswelle (6) und Leitungen (7). Aufgabe der Erfindung ist es die Montage und die Kontaktierung eines Stellantriebs in einer Klimaanlage zu vereinfachen, die Montage- und Betriebssicherheit zu erhöhen und dabei einen möglichst kompakten Aufbau zu erreichen. Diese Aufgabe wird erfindungsgemäß dadurch gelöst, dass die Ausgangswelle zu einem Rahmen oder Gehäuse feststehend montiert ist, in welchem die Klappe dreh- oder schwenkbar gelagert ist, der Stellantrieb mit der Klappe fest verbunden ist und bei Betätigung mitschwenkt, die Ausgangswelle hohl ausgebildet ist, die Leitungen durch die Ausgangswelle verlaufen und ein Stecker in die Ausgangswelle integriert ist, der mit den Leitungen verbunden ist.

## Beschreibung

Die Erfindung betrifft einen Stellantrieb zur Verstellung einer Klappe, für eine Klimaanlage, Heizung oder Lüftung, bestehend aus einem Gehäuse, einem Antriebsmotor, einem Untersetzungsgetriebe und einer Ausgangswelle und Leitungen.

Bei bekannten Stellantrieben für Klappen ist der Stellantrieb fest mit der Klimaanlage etc. verbunden, während die Ausgangswelle fest mit der Klappe verbunden ist. Dadurch sind in der Regel mindestens zwei Öffnungen im Gehäuse des Stellantriebs notwendig, einmal im Bereich der Ausgangswelle und zum anderen im Bereich der Leitungen, die durch das Gehäuse hindurchtreten. Dies erfordert einen erhöhten Aufwand für die Abdichtung des Gehäuses des Stellantriebs. Weiter benötigt die bekannte Anordnung relativ viel Platz für den Stellantrieb, der häufig für andere Komponenten der Klimaanlage benötigt wird. Es sind auch Anwendungen bekannt, bei denen ein Stellantrieb auf eine Klappe aufgeschraubt ist, wobei sich der Stellantrieb mit der Klappe mitdreht. Dabei sind flexible Leitungen vom Stellantrieb zur Klimaanlage verlegt, die umständlich zu montieren sind und möglicherweise durch die Klappe eingeklemmt werden und Geräusche oder Funktionsfehler verursachen können.

Aufgabe der Erfindung ist es die Montage und die Kontaktierung eines Stellantriebs in einer Klimaanlage zu vereinfachen, die Montage- und Betriebssicherheit zu erhöhen und dabei einen möglichst kompakten Aufbau zu erreichen.

Diese Aufgabe wird erfindungsgemäß dadurch gelöst, dass die Ausgangswelle zu einem Rahmen oder Gehäuse feststehend montiert ist, in welchem die Klappe dreh- oder schwenkbar gelagert ist, der Stellantrieb mit der Klappe fest verbunden ist und bei Betätigung mitschwenkt, die Ausgangswelle hohl ausgebildet ist, die Leitungen durch die Ausgangswelle verlaufen und ein Stecker in die Ausgangswelle integriert ist, der mit den Leitungen verbunden ist. Durch die Verwendung des Steckers sind keine störenden Kabel notwendig, die bei der Montage eingeklemmt werden oder im Betrieb Geräusche verursachen könnten. Durch die Verlegung des Stellantriebs an die Klappe, kann der ansonsten ungenutzte Raumbereich in einem Luftkanal genutzt werden. Eine Begrenzung besteht lediglich in der Dicke des Antriebs, damit der Kanalquerschnitt nicht zu sehr reduziert wird.

Weiterbildungen der Erfindung werden durch die Unteransprüche dargestellt. Durch einstückige Ausbildung des Steckers mit der Ausgangswelle, werden zusätzliche Montageschritte eingespart. Außerdem wird der Aufwand für die ggfs. erforderliche Abdichtung des Stellantriebs geringer. Entsprechend günstig ist es die Ausgangswelle als Gehäuse für den Stecker zu verwenden.

Zweckmäßigerweise wird die Ausgangswelle so angeordnet, dass sie ein Teil eines Schwenklagers für die Stellantrieb bildet. Dadurch ist die Teileanzahl und der Montageaufwand am geringsten. Vorzugsweise sind zwei Schwenklager vorgesehen.

Besonders vorteilhaft ist es, wenn Teile des Stellantriebs mit der Klappe einstückig sind. Dadurch können u. U. Teile des Antriebs, z.B. Gehäuseteile eingespart werden. Der optimale Fall ist gegeben, wenn die Klappe als Gehäuse für den Stellantrieb dient.

Da der Antriebsmotor zusammen mit dem Stellantrieb relativ zum Stecker verschwenkbar ist, ist eine Ausgleichsmöglichkeit für die Leitungen erforderlich, dies geschieht entweder dadurch, dass die Leiter zwischen dem feststehenden Stecker und dem schwenkbaren Stellantrieb flexibel ausgebildet sind oder zumindest teilweise durch Schleifer und Schleiferbahnen gebildet werden.

Für die Realisierung des Stellantriebs sind unterschiedlichste Antriebskonzepte denkbar. In einer Ausführungsvariante ist die Verwendung eines Schrittmotors vorgesehen.

Eine optimale Ausnutzung des zur Verfügung stehenden Bauraums wird dadurch erreicht, dass in der hohlen Ausgangswelle eine Leiterplatte angeordnet ist. Diese Leiterplatte kann beispielsweise eine BUS-Controller-Schaltung tragen, um in einem Multiplexverfahren angesteuert werden zu können.

Die Erfordemisse eines geräuscharmen Stellantriebs können auf einfache Weise dann erfüllt werden, wenn die Ausgangswelle zumindest teilweise von einem Elastomermaterial umgeben ist, das den Kontakt zum Rahmen oder Gehäuse herstellt. Das Elastomermaterial kann hierbei durch eine Zwei-Komponenten-Spritzgusstechnik aufgebracht.werden oder durch Montage eines O-Rings.

Es wird angestrebt, die Montage des Stellantriebs (1) an den Rahmen oder das Gehäuse (8) und die Kontaktierung des Steckers (9) in einem Arbeitsgang durchzuführen. Dadurch werden Verfahrensschritte eingespart und die Fehleranfälligkeit bei der Montage herabgesetzt.

Die Erfindung wird nachfolgend anhand eines Ausführungsbeispiels mit Varianten näher erläutert. Es zeigen:
- Fig. 1: eine Schnittansicht durch einen Stellantrieb,
- Fig. 2: eine Draufsicht auf den geöffneten Stellantrieb,
- Fig. 3: eine Schnittansicht eines Ausgangszahnrades,
- Fig. 4a: eine Schnittansicht durch das Ausgangszahnrad einer ersten Variante mit Schleiferkontaktierung,
- Fig. 4b: eine Draufsicht auf eine Schleiferkontaktierung einer zweiten Variante,
- Fig. 5: zeigt eine Schnittansicht durch die Ausgangswelle 6 einer dritten Variante,
- Fig. 6: eine vereinfachte Darstellung des an eine Klappe montierten Stellantriebs,
- Fig. 7: eine Schnittansicht durch Befestigungsmittel des Stellantriebs an die Klappe Im eingebauten Zustand und
- Fig. 8: ein Gehäuseteil.

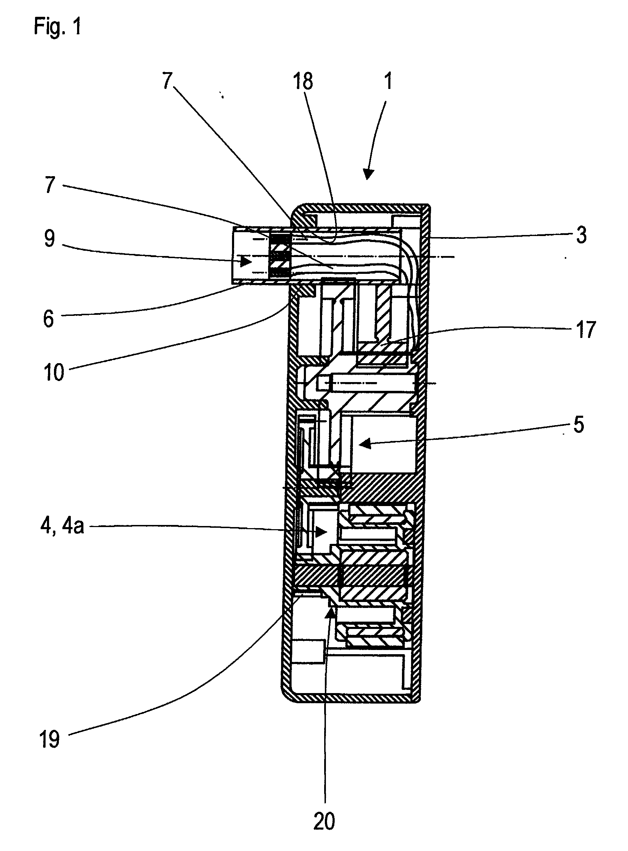

Fig. 1 zeigt eine Schnittansicht durch einen Stellantrieb 1, einem Gehäuse 3, einem Antriebsmotor 4 in Form eines Schrittmotors 4a, einem Untersetzungsgetriebe 5, einer Ausgangswelle 6, Leitungen 7 und einem Stecker 9. Die Leitungen 7 sind flexibel vom Stecker 9 in der Ausgangswelle 6 zum Antriebsmotor 4 geführt, wodurch Relativbewegungen zwischen dem Stecker 9 und dem Antriebsmotor 4 oder dem Stellantrieb 1 im allgemeinen ermöglicht werden. Eine Verdrehsicherung der Ausgangswelle kann dadurch realisiert werden, dass der Stecker 9 und ein entsprechender Gegenstecker einen unsymmetrischen Querschnitt aufweisen. Die Ausgangswelle 6 bildet einen Teil eines Schwenklagers 10, das als Lagerzapfen ausgebildet ist und in einem entsprechenden Gegenlager 18 des Gehäuses 3 des Stellantriebs 1 schwenkbeweglich lagert. Der Antriebsmotor 4 weist ein Ritzel 19, das fest mit einem Rotor 20 des Elektromotors 4 ist und das Untersetzungsgetriebe 5, das aus mehreren Stimradgetriebestufen und einem Ausgangszahnrad 17 besteht auf, wobei das Ausgangszahnrad einstückig mit der Ausgangswelle 6 ist.

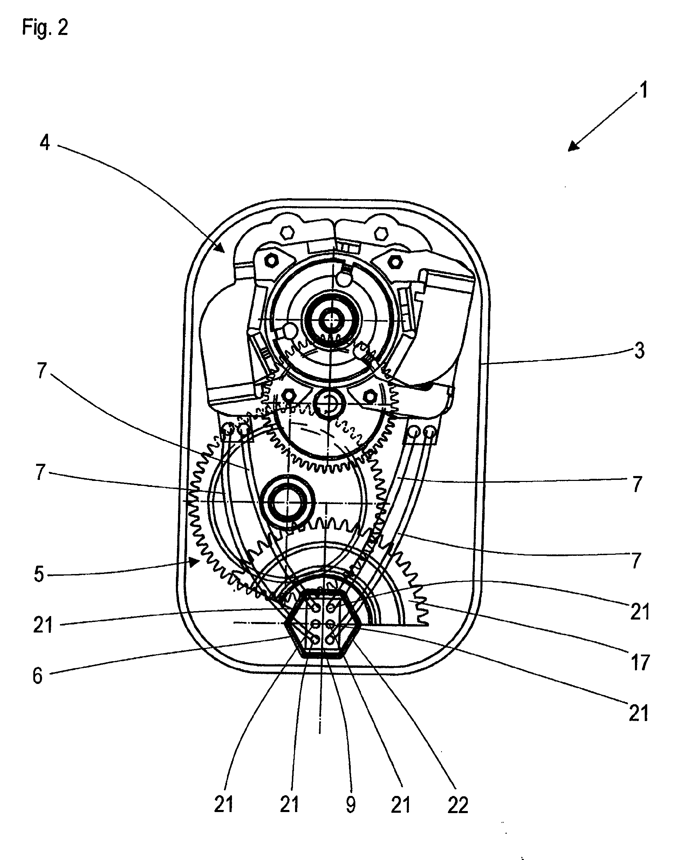

Fig. 2 zeigt eine Draufsicht auf den geöffneten Stellantrieb 1, mit dem Gehäuse 3, dem Antriebsmotor 4, dem Untersetzungsgetriebe 5, dem Ausgangszahnrad 17, der Ausgangswelle 6, dem Stecker 9 und der Steckerkontakte 21, die aus Rund-, Vierkant-Pfosten oder Leitblechen bestehen. Die Kontaktierung der Steckerkontakte 21 zu den innen liegenden Leitungen 7 können durch Crimpen, Schweißen, Klemmen oder Löten erfolgen. Eine Verdrehsicherung ist hier durch ein Sechskantprofil 22 als Außenbegrenzung der Ausgangswelle 6 realisiert.

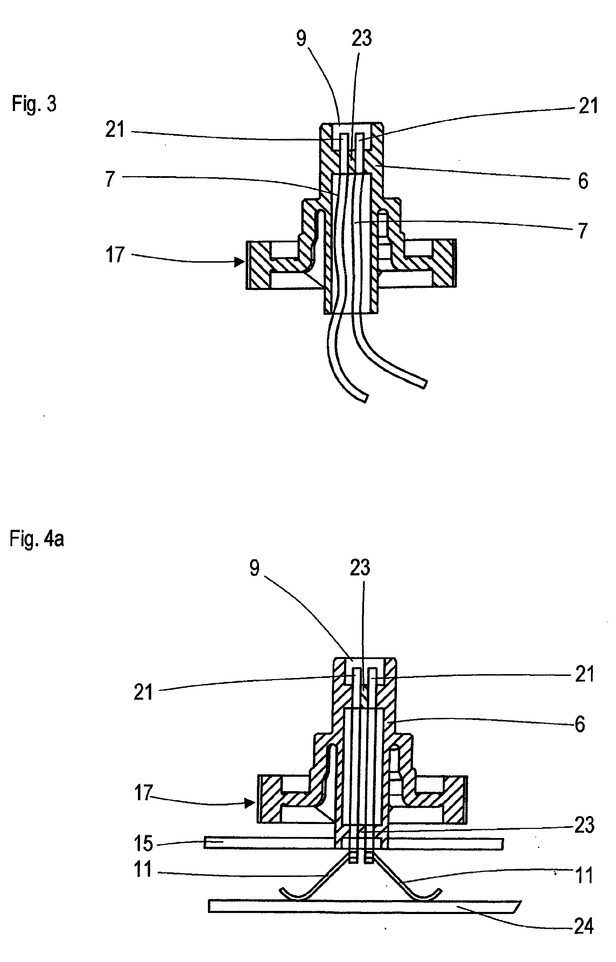

Fig. 3 zeigt eine Schnittansicht des Ausgangszahnrades 17 und damit der Ausgangswelle 6, mit dem Stecker 9, bestehend aus der hohlen Ausgangswelle 6 als Steckergehäuse, einem Träger 23 für die Steckerkontakte 21 und flexiblen Leitungen 7.

Fig. 4a eine Schnittansicht durch das Ausgangszahnrad 17 einer ersten Variante mit Schleiferkontaktierung, bestehend aus Schleifern 11, einer Schleiferleiterplatte 24, dem Stecker 9, Steckerkontakten 21, wobei diese durch das Gesamte Ausgangszahnrad 17 verlaufen und am gegenüberliegenden Ende mit den Schleifern 11 kontaktiert sind. Die Steckerkontakte 21 sind durch zwei Träger 23 gehalten. Das Ausgangszahnrad 17 ist einerseits im Gehäuse des Stellantriebs (hier nicht dargestellt) und andererseits in der Zwischenplatte 15 gelagert.

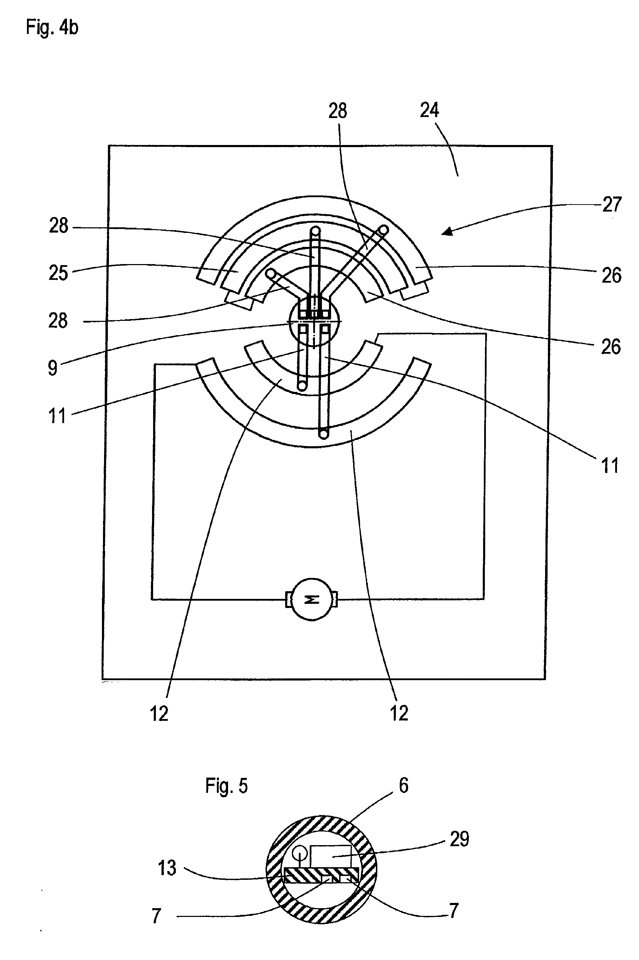

Fig. 4b zeigt eine Draufsicht auf die Schleiferkontaktierung einer zweiten Variante mit leitenden Schleiferbahnen 12, die auf der Schleiferleiterplatte 24 angeordnet sind. Zusätzlich sind eine Widerstandsbahn 25 und eine weitere leitende Schleiferbahn 26 eines Potentiometers 27 dargestellt. Das Potentiometer 27 dient zur Regelung der Klappenstellung. Die Schleifer 11 dienen lediglich der Übertragung der Versorgungsspannung, während Schleifer 28 das Potentiometer 27 mit dem Stecker 9 verbinden.

Fig. 5 zeigt eine Schnittansicht durch die Ausgangswelle 6 einer dritten Variante mit einer Leiterplatte 13, die z. B. eine BUS-Controller-Schaltung 29 trägt. Die Leiterplatte 13 ist dabei in die hohle Ausgangswelle 6 montiert, sie kann dabei auch einen Teil bzw. Abschnitte der Leitungen 17 enthalten.

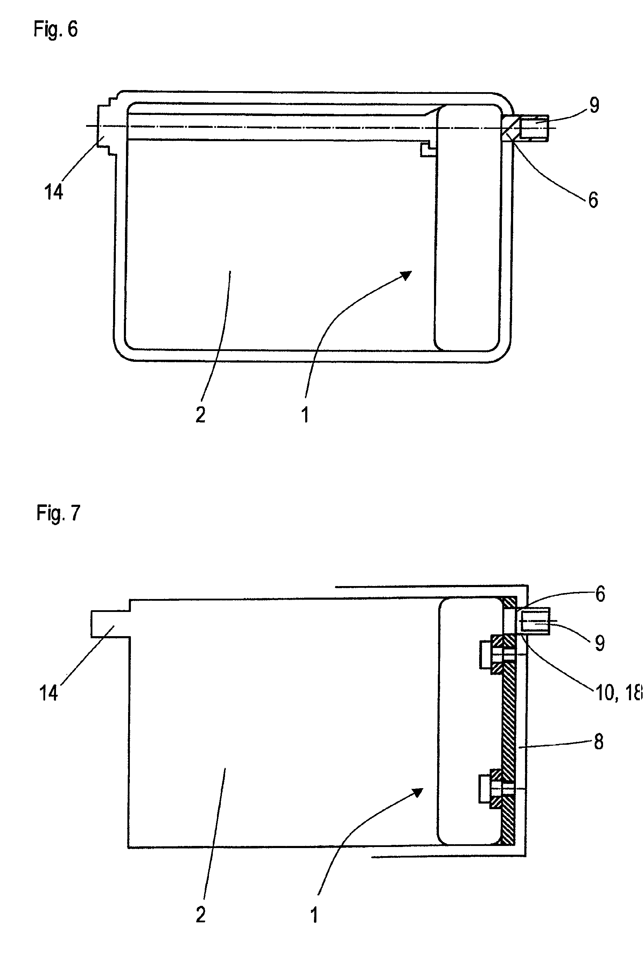

Fig. 6 zeigt eine vereinfachte Darstellung des an eine Klappe 2 montierten Stellantriebs 1, mit dem Stecker 9, der Ausgangswelle 6 und einem Lagerzapfen 14, mit dem die Klappe 2 z. B. im Gehäuse einer Heizungs-, Lüftungs- oder Klimaanlage gelagert ist. Die Klappe 2 und der Stellantrieb 1 bilden eine Baueinheit.

Fig. 7 zeigt die miteinander verschraubte Baueinheit aus Stellantrieb 1 und Klappe 2 in einem Rahmen oder einem Gehäuse 8 (z. B. einer Klimaanlage) eingebaut. Die Ausgangswelle 6 und der Stecker 9 sind zum Rahmen bzw. Gehäuse 8 fest eingebaut. Im Betrieb schwenkt der Stellantrieb 1 mit der Klappe 2 um die Ausgangswelle 6. Das Lager 10, 18 ist die einzige Öffnung im Gehäuse 3 des Stellantriebs 1 und damit die einzige Verbindung des Innenbereichs des Stellantriebs 1 mit der Außenwelt. Dadurch ist eine Abdichtung einfacher herzustellen.

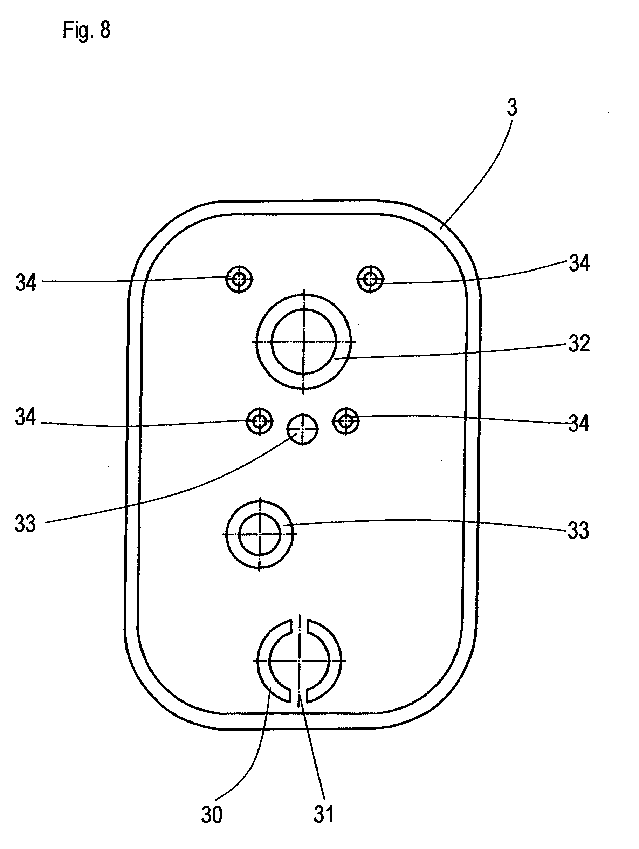

Fig. 8 zeigt ein Gehäuseteil 3 des Stellantriebs, mit einem Lager 30 für die Ausgangswelle, welches mit einer Ausnehmung 31 versehen ist, die als Leiterdurchgang dient, Lager 32 für Getrieberäder, ein Lager 33 für den Rotor und Fixierzapfen 34 für den Antriebsmotor.

### Bezugszeichenliste

- 1: Stellantrieb
- 2: Klappe
- 3: Gehäuse (des Stellantriebs)
- 4: Antriebsmotor (4a Schrittmotor)
- 5: Untersetzungsgetriebe
- 6: Ausgangswelle
- 7: Leitungen
- 8: Rahmen oder Gehäuse (z.B. der Klimaanlage
- 9: Stecker
- 10: Schwenklager
- 11: Schleifer
- 12: Schleiferbahnen
- 13: Leiterplatte
- 14: Lagerzapfen
- 15: Zwischenplatte
- 16: Gegenstecker
- 17: Ausgangszahnrad
- 18: Gegenlager
- 19: Ritzel
- 20: Rotor
- 21: Steckerkontakte
- 22: Sechskantprofil
- 23: Träger für die Steckerkontakte
- 24: Schleiferleiterplatte
- 25: Widerstandsbahn
- 26: weitere Schleiferbahn
- 27: Potentiometer
- 28: Schleifer (der Potentiometer)
- 29: Bus-Controller-Schaltung
- 30: Lager für die Ausgangswelle
- 31: Ausnehmung
- 32: Lager für das Getriebe
- 33: Lager für Getrieberäder
- 34: Fixierzapfen für den Antriebsmotor

## Patentansprüche

1. Stellantrieb (1) zur Verstellung einer Klappe (2), für eine Klimaanlage, Heizung oder Lüftung, bestehend aus einem Gehäuse (3), einem Antriebsmotor (4), einem Untersetzungsgetriebe (5) und einer Ausgangswelle (6) und Leitungen (7), **dadurch gekennzeichnet, dass** die Ausgangswelle (6) zu einem Rahmen oder Gehäuse (8) feststehend montiert ist, in welchem die Klappe (2) dreh- oder schwenkbar gelagert ist, der Stellantrieb (1) mit der Klappe (2) fest verbunden ist und bei Betätigung mitschwenkt, die Ausgangswelle (6) hohl ausgebildet ist, die Leitungen (7) durch die Ausgangswelle (6) verlaufen und ein Stecker (9) in die Ausgangswelle (6) integriert ist, der mit den Leitungen (6) verbunden ist.

2. Stellantrieb nach Anspruch 1, **dadurch gekennzeichnet, dass** die Ausgangswelle (6) einstückig mit dem Stecker (9) ist.

3. Stellantrieb nach Anspruch 1 oder 2, **dadurch gekennzeichnet, dass** die Ausgangswelle (6) das Gehäuse des Steckers (9) ist.

4. Stellantrieb nach Anspruch 1, 2 oder 3, **dadurch gekennzeichnet, dass** die Ausgangswelle (6) ein Teil eines Schwenklagers (10) für die Stellantrieb (1) bildet.

5. Stellantrieb nach Anspruch 4, **dadurch gekennzeichnet, dass** der Stellantrieb (1) zwei Schwenklager (10) aufweist.

6. Stellantrieb nach Anspruch 1, 2, 3, 4 oder 5, **dadurch gekennzeichnet, dass** Teile des Stellantriebs (1) mit der Klappe (2) einstückig sind.

7. Stellantrieb nach Anspruch 6, **dadurch gekennzeichnet, dass** die Klappe (2) als Gehäuse (6) für den Stellantrieb dienen.

8. Stellantrieb nach Anspruch 1, 2, 3, 4, 5, 6 oder 7, **dadurch gekennzeichnet, dass** die Leitungen (7) vom feststehenden Stecker (9) zum relativ dazu schwenkbaren Stellantrieb (1) flexibel ausgebildet sind oder zumindest teilweise durch Schleifer (11) und Schleiferbahnen (12) gebildet werden.

9. Stellantrieb nach Anspruch 8, **dadurch gekennzeichnet, dass** ein Lager (30) zur Aufnahme der Ausgangswelle (6) mit einer Ausnehmung (31) versehen ist, das zur Aufnahme der Leitungen (7) dient.

10. Stellantrieb nach zumindests einem der vorangehenden Ansprüche, **dadurch gekennzeichnet, dass** der Antriebsmotor (4) ein Schrittmotor (4a) ist.

11. Stellantrieb nach zumindest einem der vorangehenden Ansprüche, **dadurch gekennzeichnet, dass** der Antriebsmotor (4) ein Gleichstrommotor ist.

12. Stellantrieb nach zumindest einem der vorangehenden Ansprüche, **dadurch gekennzeichnet, dass** in der hohlen Ausgangswelle (6) eine Leiterplatte (13) angeordnet ist.

13. Stellantrieb nach Anspruch 12, **dadurch gekennzeichnet, dass** die Leiterplatte (13) eine BUS-Controller-Schaltung trägt.

14. Stellantrieb nach zumindest einem der vorangehenden Ansprüche, **dadurch gekennzeichnet, dass** die Ausgangswelle (6) zumindest teilweise durch ein Elastomermaterial umgeben ist, das den Kontakt zum Rahmen oder Gehäuse (8) herstellt.

15. Verfahren zur Herstellung eines Stellantriebs nach Anspruch 14, **dadurch gekennzeichnet, dass** das Elastomermaterial in Zwei-Komponenten-Spritzgusstechnik aufgebracht wird oder dass ein O-Ring aufgeschoben wird.

16. Verfahren zur Montage eines Stellantriebs nach einem der vorhergehenden Ansprüche, **dadurch gekennzeichnet, dass** die Montage des Stellantriebs (1) an den Rahmen oder das Gehäuse (8) und die Kontaktierung des Steckers (9) in einem Arbeitsgang erfolgt.
